# EUROPEAN PATENT APPLICATION

(11) **EP 1 217 775 A2**
(43) Date of publication of application: **26.06.2002**
(21) Application number: 01310402.1
(22) Date of filing: 12.12.2001
(51) Int. Cl.: H04J 14/02, H04Q 11/00

(54) **Shared protection in an optical network**

(30) Priority: 19.12.2000 US 741262
(71) Applicant: Nortel Networks Limited, St. Laurent, Quebec H4S 2A9 (CA)
(72) Inventor: Lu, Xiang, Hertfordshire CM23 5TB (GB)
(74) Representative: Ryan, John Peter William

(57) **Abstract**

Optical/photonic networks require rapid restoration in the event of network failure. This is in part because buffering in the core network is undesirable in such networks. By producing a list alternative (disjoint) cycles ordered in path length, before network failures, the restoration time may rapidly be reduced since suitable protection paths have already been calculated. The "lengths" may be adjusted to balance the use of spans as protection paths across the network.

## Description

### Technical field

This invention relates to methods and apparatus for selecting a protection path in an optical network and for preparing for failure of a working path in an optical network.

### Background of the invention

The invention is applicable to optical and photonic networks. The principal characteristics of such networks is that signals transmitted through the network should remain largley in the optical domain. This means that such networks are designed to avoid the requirement to buffer signals in the core network (since this is difficult and/or expensive to implement in such networks).

Thus in "carrier-grade" optical networks it is required that any network restoration following a failure using alternative "protection" paths must be implemented quickly since otherwise data will be lost within the network. Switching times of the order of 100 milliseconds or less are typically required in order to avoid data lossand to provide "carrier-grade" service levels.

Several conventional approaches to this problem are in use. Typically, these approaches require redundant paths to be provided between network nodes. In this case restoration simply requires signals to be switched from the failed working path to the redundant restoration path. A common configuration for mesh networks is the so-called 1 + 1 approach. This effectively means that for each span between a network node, two paths are provided; a working path and a redundant restoration path. In this situation, the only delay in restoring the network in the event of failure is the delay required to switch from the failed working path to the restoration path. This technique allows sufficiently fast restoration to occur for use in optical networks.

However, it will be appreciated that with the 1 + 1 configuration and indeed the other conventional configurations, the redundancy means that network utilisation in terms of use of available paths is only typically about 50%. Thus this type of network protection scheme is expensive.

Increasingly, optical networks are arranged in "mesh" configurations in which the network is not arranged linearly or in a ring but instead has nodes which may connect to many adjacent nodes. A mesh configuration provides a large number of alternative paths between any two nodes in the network. Thus one possibility to improve network utilisation and yet provide adequate network protection, is to share protection paths between working paths in the sense that a particular span between nodes in the network may form the protection path for more than one working path.

In principle this idea appears to solve the problems of the prior art protection scheme. However, in practice, it is not practical to calculate an alternative protection path and to cause switching to occur quickly enough for use in optical networks without data loss occurring or without requiring the network to buffer data.

### Summary of the invention

In a first aspect the invention provides a method of selecting a protection path between a first and a second node in an optical mesh network comprising the steps of determining a working path between the first and second nodes, determining a plurality of possible cycles through the network between the first and second nodes, each possible cycle comprising a respective working path and a protection path which does not share nodes with the respective working path, for each possible cycle, calculating the cycle length by summing the lengths of each span in the respective possible cycle, and generating an ordered list of the possible cycles by sorting the cycles according to their respective cycle lengths, wherein in the event of a subsequent failure in the working path between the first and second nodes, one of the possible cycles is instantaneously selected as a protection path, the selection being based on the possible cycle position in the ordered list.

In one preferred embodiment, the method further comprises applying a weighting to each possible cycle which is determined at least in part by the extent to which any span in the respective possible cycle is shared by any span of a second possible cycle which has been determined for a second working path which is different to the said working path, and wherein the selection of the protection path is based also on the applied weighting.

In a further preferred embodiment, the method further comprises applying a weighting to each possible cycle which is determined at least in part by the extent to which any span in the respective possible cycle is shared by any span of a second possible cycle which has been determined for a second working path which is different to the said working path, the weighting being applied by adjusting a length value associated with each span in the cycle, the length value being used in the step of producing an ordered list of possible cycles.

In a second aspect, the invention provides a method of preparing for failure of a working path in an optical mesh network comprising the steps of determining a plurality of possible cycles through the network having the same beginning and end nodes as the working path, each possible cycle comprising the working path and a protection path and each protection path not including any node which is included in the working path, for each possible cycle, calculating the cycle length by summing the lengths of each span in the respective possible cycle, and generating an ordered list of the possible cycles by sorting the cycles according to their respective cycle lengths.

In an apparatus aspect, the invention provides network management apparatus for an optical mesh network comprising a network analyser and a protection path database, the network analyser being operable to determine for each working path in the network, a plurality of possible protection paths through the network having the same beginning and end nodes as the respective working path but not sharing any other nodes with the respective working path and which together with the respective working path, form a plurality of possible cycles, to calculate the cycle length for each possible cycle, by summing the lengths of each span between nodes in the respective possible cycle, and to store the plurality of possible cycles in the protection path database as an ordered list of the possible cycles sorted according to their respective cycle lengths.

In accordance with a second apparatus aspect, the invention provides computer software for managing an optical mesh network which when executed causes the following steps to be carried out; determining a plurality of protection paths through the network having the same beginning and end nodes as a working path in the network and not sharing any other nodes with the working path, the working path and a protection path together forming a possible cycle, for each possible cycle, calculating the cycle length by summing the lengths of each span in the respective possible cycle, and generating an ordered list of the possible cycles by sorting the cycles according to their respective cycle lengths.

The invention also includes computer software for managing an optical mesh network which when executed carries out the method steps of the above aspects.

Thus by providing an ordered list of possible cycles (i.e. a path from the beginning node of the working path to the end node of the working path and back again, and which does not traverse any node twice) which is calculated before failure, it is possible rapidly to choose the protection path (typically that of the first cycle in the list) when a failure occurs. In this context, the term "instantaneous" is used to mean sufficiently quickly to avoid data loss or buffering within an optical network. Thus typically instantaneous will mean 200 milliseconds or less and preferably 100 milliseconds or less following failure of the working path.

Furthermore, the cycles may be made to interact with cycles including protection paths for other working patsh. for example, by using adjustments to the 'length's of the spans. One technique for doing this is to calculate a weighting for each span according to the formula µ^{*BWp*/*BWtot*} where µ is a constant, *BWp* is the protection bandwidth for the span summed over all possible cycles which include the span, and *BWtot* is the total bandwidth which the span is capable of carrying.

The idea of using graph theory to calculate a shortest cycle between nodes has been mooted before. The leading paper in this field is *J W Suurballe and R E Tarjan, "A quick method for finding shortest pairs of disjoint paths", Networks, 14 (1984) pages 235 to 336.* Another paper in this area is *Ramesh Bhandari*, *"Optimal Diverse Routing in Telecommunication Fiber Networks", 1994 Proc.Infocom IEEE pages 1498 to 1508.* However, it has not been suggested that these techniques be used to prepare an ordered list of suitable protection cycles. This extra step allows the techniques to have practical applications.

The preferred features may be combined as appropriate, as would be apparent to a skilled person, and may be combined with any of the aspects of the invention.

Other aspects and features of the present invention will become apparent to those ordinarily skilled in the art upon review of the following description of specific embodiments of the invention in conjunction with the accompanying figures.

### Brief description of the drawings

Figure 1 is a schematic diagram of a portion of optical network;
Figure 2 is a schematic block diagram of apparatus in accordance with the invention.
Figure 3 is a flow chart showing the steps involved in producing an ordered list of possible protection paths; and

### Detailed description of the invention

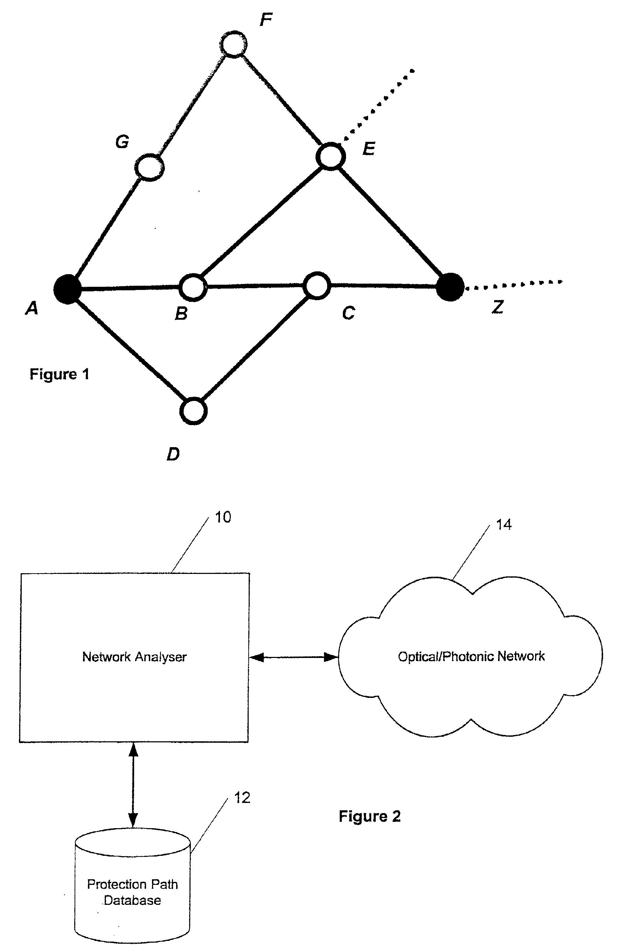

Figure 1 is a schematic diagram of a portion of a mesh network. The network has nodes A-G and Z. The dotted lines extending from nodes E and Z denote connections to other nodes in the network.

Thus with reference to Figure 2, a network analyser 10 is provided with a list of working paths which are to be protected. For the sake of illustration, we assume that the working path between nodes A-Z is the path ADCZ.

The network analyser then proceeds to generate a list of all possible disjoint cycles (in this example ABEZCDA, AGFEZCBA, AND AGFEZCDA) and stores them in an ordered list in the protection path database 12.

As discussed above, the list is ordered in terms of length of the cycle. The length of the cycle having been calculated by summing the lengths of each of the spans i.e. in the case of the first cycle in the list, the lengths of the spans between nodes A and B, B and E, E and Z, Z and C, C and D and D and A

Thus in the event of a failure in the working path ADCZ, the network operator may access the protection path database 12 and select the first cycle in the list namely ABEZCDA. The network 14 may then be caused to switch data which had been passing over the path ADCZ instead over the path ABEZ and the return path ZCDA. If this path also fails, then there is a possibility of using the next cycle in the list (AGFEZCBA) and so on.

It will be noted that in order to reduce redundancy in the network 14, it is desirable to share protection spans. Thus, the network analyser also operates to maintain a database of the "lengths" between the nodes. Initially these lengths may be set at the actual physical lengths between the nodes. Alternatively, the lengths may initially be weighted to deter the network analyser from giving particular paths which include particular spans, a high ranking in the ordered list.

The network analyser may adjust these "lengths" as increasing numbers of protection paths use particular spans. Thus for example if the working path AGF were to be protected, one possible protection cycle would be ABEFGA. However, the span between nodes B and E is also part of shortest cycle for protecting the working path ADCZ. In this instance, the network analyser when first assigning the span BE to a protection path would increase the "length" in its database so that when that span is considered for use in another protection path it is a less desirable span since its length may be greater than other spans which could replace it in the protection path.

In this way, the sharing of protection paths may be balanced across the network so that a large number of protection paths are not vulnerable to a failure in a single span.

One suitable algorithm for weighting the use of the spans in this way is to use the exponential function µ ^{(bandwidth potentially used for protection)/ (total protection bandwidth transmissible over the span).} The "total bandwidth" is the physical possible capacity. For a span flanked by transponders, this capacity is the sum of all wavelengths, for a span without transponders, this is the unit of wavelength. The assumptiion is that the protection links are not used by the working traffic at this same time, and the protection links are not carrying traffic, they are just ready to carry the working traffic in the event of a protection switch.

It will be seen that this function provides a weighting (which may for example be used as a product with the initial length of a particular span) which is exponentially related to the protection bandwidth which potentially could traverse the span divided by the total transmissible bandwidth over the span. Thus, the exponent of the function approaches unity as the protection bandwidth approaches the maximum possible bandwidth and the value of the function (and therefore the length of the span) increases dramatically thereafter.

Thus the algorithm will give higher priority to spans which have not been selected already to form a protection path and to spans which have remaining bandwidth capacity.

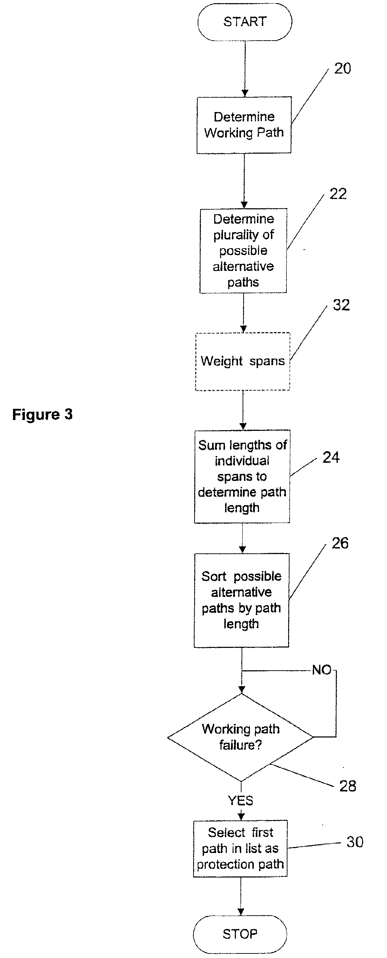

Figure 3 shows the steps carried out by the network analyser.

In step 20, the network analyser determines or is provided with a working path. In step 22, the network analyser determines a plurality of possible cycles between the endpoints of the path.

In step 24, the network analyser sums the length of the individual spans to determine the lengths of each of the possible alternative cycles and then in step 26 sorts the possible alternative cycles by length.

Having pre-calculated these working paths, the network may continue to operate in a normal fashion. In the event of a working path failure (step 28), the first cycle in the list may be selected (step 30). This selection may occur rapidly or instantaneously because the path has been pre-calculated. The only delay in implementing the protection path therefore is in switching the nodes which need to be switched to put the protection path into effect.

Optionally in step 32, the spans may be weighted as discussed above by increasing the effective length of any spans which are shared with protection paths for other working paths. This achieves balancing of the protection paths through the network.

Thus, the protection database contains an ordered list of cycles which may form possible protection paths for each working path which has been analysed by the network analyser 10. This tool typically would be used when setting up a network. However, it may be used dynamically to react to changes in network configurations with little or no user intervention. Thus not only does the invention provide good use of resources by allowing optical or photonic networks to have shared protection paths but it also automates much of the procedure in choosing suitable protection paths. This latter advantage is particularly useful since the complexity of a mesh network is too great to allow the type of manual analysis which has been used above to explain the invention, to be practically performed.

## Claims

1. A method of selecting a protection path between a first and a second node in an optical mesh network comprising the steps of :-
(a) determining (20) a working path between the first and second nodes,
(b) determining (22) a plurality of possible cycles through the network between the first and second nodes, each possible cycle comprising a respective working path and a protection path which does not share any nodes with the respective working path
(c) for each possible cycle, calculating (24) the cycle length by summing the lengths of each span in the respective possible cycle, and
(d) generating (26) an ordered list of the possible cycles by sorting the cycles according to their respective cycles lengths,
wherein in the event of a subsequent failure (28) in the working path between the first and second nodes, one of the possible cycles is instantaneously selected as a protection path, the selection being based on the possible cycle position in the ordered list.

2. A method according to claim 1, further comprising applying (32) a weighting to each possible cycle which is determined at least in part by the extent to which any span in the respective possible cycle is shared by any span of a second possible cycle which has been determined for a second working path which is different to the said working path, and wherein the selection of the protection path is based also on the applied weighting.

3. A method according to claim 1, further comprising applying (32) a weighting to each possible cycle which is determined at least in part by the extent to which any span in the respective possible cycle is shared by any span of a second possible cycle which has been determined for a second working path which is different to the said working path, the weighting being applied by adjusting a length value associated with each span in the cycle, the length value being used in the step of producing an ordered list of possible cycles.

4. A method according to claim 2 or claim 3, wherein the weighting for each span is calculated according to the formula µ^{*BWp*/*BWtot*} where µ is a constant, *BWp* is the protection bandwidth for the span summed over all possible cycles which include the span, and *BWtot* is the total bandwidth which the span is capable of carrying.

5. A method of preparing for failure of a working path in an optical mesh network comprising the steps of:-
(a) determining (22) a plurality of possible cycles through the network having the same beginning and end nodes as the working path, each possible cycle comprising the working path and a protection path and each protection path not including any node which is included in the working path,
(b) for each possible cycle, calculating (24) the cycle length by summing the lengths of each span in the respective possible cycle, and
(c) generating (26) an ordered list of the possible cycles by sorting the cycles according to their respective cycle lengths.

6. A method according to claim 5, further comprising applying a weighting to each possible cycle which is determined at least in part by the extent to which any span in the respective possible cycle is shared by any span of a second possible cycle which has been determined for a second working path which is different to the said working path, and wherein the ordering of the possible cycles is based also on the applied weighting.

7. A method according to claim 5, further comprising applying a weighting to each possible cycle which is determined at least in part by the extent to which any span in the respective possible cycle is shared by any span of a second possible cycle which has been determined for a second working path which is different to the said working path, the weighting being applied by adjusting a length value associated with each span in the cycle, the length value being used in the step of producing an ordered list of possible cycles.

8. A method according to claim 6 or claim 7, wherein the weighting for each span is calculated according to the formula µ^{*BWp*/*BWtot*} where µ is a constant, *BWp* is the protection bandwidth for the span summed over all possible cycles which include the span, and *BWtot* is the total bandwidth which the span is capable of carrying.

9. Network management apparatus for an optical mesh network (14) comprising a network analyser (10) and a protection path database (12), the network analyser being operable to determine for each working path in the network, a plurality of possible protection paths through the network having the same beginning and end nodes as the respective working path but not sharing any other nodes with the respective working path and which together with the respective working path, form a plurality of possible cycles, to calculate for each possible cycle, the cycle length by summing the lengths of each span in the respective possible cycle, and to store the plurality of possible cycles in the protection path database as an ordered list of the possible cycles sorted according to their respective cycle lengths.

10. A protection path database (12) for an optical mesh network (14), the database being arranged to record a plurality of possible cycles through the network each comprsing and working path and protecion path for the respective working path, the protection path not sharing any nodes with the working path, and each possible cycle having a cycle length which is the sum of the lengths of each span in the respective possible cycle, and the database being arranged to store the plurality of possible cycles as an ordered list of the possible cycles sorted according to their respective cycle lengths.

11. Computer software for managing an optical mesh network (14) which when executed causes the following steps to be carried out:-
(a) determining (22) a plurality of protection paths through the network having the same beginning and end nodes as a working path in the network and not sharing any other nodes with the working path, the working path and a protection path together forming a possible cycle,
(b) for each possible cycle, calculating (24) the cycle length by summing the lengths of each span in the respective possible cycle, and
(c) generating (26) an ordered list of the possible cycles by sorting the cycles according to their respective cycle lengths.

12. A node in an optical mesh network (14), the node forming part of a working path in the network and being operable to:-
(a) determine (22) a plurality of possible cycles through the network having the same beginning and end nodes as the working path, each possible cycle comprising the working path and a protection path and each protection path not including any node which is included in the working path,
(b) for each possible cycle, to calculate (24) the cycle length by summing the lengths of each span in the respective possible cycle,
(c) generate (26) an ordered list of the possible cycles by sorting the cycles according to their respective cycle lengths, and
(d) dynamically to select (30) one of the possible cycles and cause the network to switch data over the cycle, in response to a failure (28) in the working path.
